# EUROPEAN PATENT SPECIFICATION

(11) **EP 2 793 097 B1**
(45) Date of publication and mention of the grant of the patent: **05.07.2017**
(21) Application number: 14164587.9
(22) Date of filing: 14.04.2014
(51) Int. Cl.: G05D 23/19, F24F 11/00, F24D 19/10, G05B 15/02

(54) **Thermostat for a HVAC**
Thermostat für ein HLK-System
Thermostat pour un HVAC

(30) Priority: 18.04.2013 NL 2010658
(43) Date of publication of application: 22.10.2014
(60) Divisional application: 17171710.1
(73) Proprietor: ROBERT BOSCH GMBH, 70442 Stuttgart (DE)
(72) Inventor: Cusell, Erica, 7411PN Deventer (NL); Zavialova, Tetiana, 41300 Krolevets, Sumy Oblast (UA); van Wijk, Cornelis Jan Herman, 7331DR Apeldoorn (NL); Boesveld, Willem, 7396 PG De Vecht (NL); Kalk, Hendrik Johannes, 7421AZ Deventer (NL)

(56) References cited:
- EP-A1- 2 251 614
- WO-A2-2013/005027
- CH-A5- 635 915
- JP-A- 2010 099 123
- US-A1- 2004 182 439
- US-A1- 2010 280 667
- US-A1- 2010 289 643
- US-A1- 2011 106 316
- US-A1- 2011 202 185
- US-A1- 2011 270 452
- US-B1- 8 090 477

## Description

### TECHNICAL FIELD

The invention relates to a thermostat.

### BACKGROUND ART

Thermostats for controlling a room temperature in e.g. domestic heating systems are widely used. The thermostat may be used for control of a domestic heating device of a domestic heating system such as a central heating system, for providing heated liquid medium to a radiator of the heating system and/or providing heated tap water. In particular, domestic heating devices are part of a central heating system in buildings, for example houses. The heated liquid medium is supplied to a radiator, such as a wall-mounted panel, for heating the building and/or for providing heated tap water. The thermostat may also be used to control an air conditioner and/or a ventilation, or any combination of heating, ventilation and air conditioning. Generally, a device for heating, ventilation and/or air conditioning is referred to in this document as a HVAC.

From originally being implemented as electromechanical devices that switch the heating system on and off in dependence on a temperature sensitive switching element, the thermostats developed into electronic control devices, with added functionality such as an electronic clock thermostat that raises and lowers a temperature setpoint in accordance with a preset clock program. Furthermore, the previous on-off control developed into a modulated control, whereby a heating power output of the domestic heating device of the heating system is modulated in steps or continuously over a heating power range.

The publication US2011/0202185 A1 discloses a zone based energy management system.

### DISCLOSURE OF THE INVENTION

The invention aims to provide an improved thermostat.

In order to achieve this goal, according to a first aspect of the invention, there is provided a thermostat for a HVAC comprising:
the further data communication port and may be arranged to
   - establish a connection via the further data communication port to a wireless communication network,
   - receive from the wireless communication network information about a connection to or location of a mobile user device,
   - derive from the received information about the connection to or location of the mobile user device if the mobile user device resides in a predetermined proximity area; and
   - setting a temperature setpoint of the thermostat to a comfort temperature when derived that the mobile user device resides in the predetermined proximity zone, and
setting the temperature setpoint of the thermostat to an absence temperature when derived that the mobile user device does not reside in the predetermined proximity zone.

Thereby, as users tend to take their mobile user device with them, the presence or absence of the mobile user device in the proximity zone may be user by the thermostat to correspondingly set the temperature setpoint to presence or absence. The proximity zone may be defined in various ways. As a practical example, the proximity zone is determined by a coverage area of a wireless home local area network, e.g. a Wi-Fi network in situ, so that, when the mobile user device connects to the wireless network, the temperature level is set by the thermostat to comfort level and vice versa. A software program running on the users mobile communication device may transmit its location, or the fact that it connects to the wireless communication network, or similar information to the thermostat, which in response thereto sets the temperature accordingly. The proximity zone may also be determined by a predetermined maximum distance in geo-location between the thermostat and the users mobile device. The mobile user device may determine its position, and send it to the thermostat via wireless data communication. The determined position of the users mobile user device may be compared with a geo-location of the thermostat and/or the HVAC, which comparison may be performed by the thermostat. Alternatively, the mobile user device may perform the comparison and send the outcome (the mobile user device in the proximity zone or out of the proximity zone) to the thermostat.

Different comfort temperatures may be associated with different users, accordingly the thermostat may comprise a first comfort temperature setpoint associated with a first mobile user device and a second comfort temperature setpoint associated with a second mobile user device, the thermostat being arranged to set the comfort temperature to the first comfort temperature setpoint when having derived that the first mobile user device resides in the predetermined proximity zone, set the comfort temperature to the second comfort temperature setpoint when having derived that the second mobile user device resides in the predetermined proximity zone and
set the comfort temperature to a highest one of the first and second comfort temperature setpoints when having derived that the first and second mobile user devices reside in the predetermined proximity zone.

According to a second aspect of the invention, there is provided a thermostat for a HVAC comprising: a data communication port for connection to the HVAC,
wherein the thermostat is arranged to
- communicate via the data communication port an operating parameter of the HVAC; and
- estimate an energy consumption of the HVAC from the communicated operating parameter of the HVAC.
The thermostat calculates an estimation of the energy consumption from an operating parameter of the HVAC. The operating parameter is thereto communicated between the HVAC and the thermostat. The operating parameter may be a setting that is determined by the thermostat in order to be transmitted (communicated) to the HVAC or a parameter that is sent (communicated) from the HVAC and received by the thermostat. As the energy consumption is estimated from an operating parameter of the HVAC, no data is required from an energy meter (e.g. a gas meter or a electricity meter as applicable) which enables to obtain an estimate of the energy consumption of the HVAC even in combination with conventional energy meter that does not incorporate any data communication facilities. The energy may be gas (such as natural gas, biogas), electricity or any suitable energy source. An accurate result may be obtained using as operating parameter a modulation level of the burner, as this parameter is in a direct relation to the momentary energy consumption, e.g. gas consumption. The modulation level may be determined by the thermostat (and communicated to the HVAC) or may be determined by the HVAC (and communicated to the thermostat). The thermostat may determine an estimated energy consumption by multiplying the modulation level with a nominal energy consumption parameter of the HVAC. For example, in case the nominal energy consumption parameter of the HVAC yields a gas consumption of 1 m^3 per hour, and the modulation level would be 40%, the estimated energy consumption would yield 40% of 1 m^3 per hour, being 0,4 m^3 per hour. In case of an on-off control of the HVAC, the operating parameter may be a percentage of time during which the HVAC is on, which parameter may similarly be multiplied by the nominal energy consumption parameter to obtain an estimated energy consumption. The nominal energy consumption parameter may be stored in the HVAC and transmitted to the thermostat, or may be programmed into the thermostat, e.g. at installation. Alternatively, the thermostat may store a table of nominal energy consumption parameter values per type of HVAC, and upon receipt of a type code from the HVAC, read a corresponding one of the nominal energy consumption parameter values from the table. Accordingly, an accurate estimation of the energy consumption which takes account of the type of HVAC, may be obtained by using a nominal energy consumption parameter. Generally, the thermostat is connected via its data communication port to the HVAC for controlling an operation of the HVAC so as to achieve a temperature setpoint as set by the thermostat. The thermostat may communicate via the data communication port with the HVAC (and/or vice versa) by means of an on/off signal, a data communication protocol such as a standard or proprietary data communication protocol, or any other suitable means. The connection from the thermostat to the HVAC via the data communication port may be a wired 1 to 1 connection, however other types of connection are possible too, for example a wired data communication network type connection, a wireless data communication network type connection such as an RF connection, Zigbee, etc. It is noted that in case of the application of such a network connection between the thermostat and the HVAC, the data communication port and the further data communication port via which the thermostat may communicate with a user device, a server, etc. (as will be described below) may communicate via a same network, such as a home automation network.

In a combustion type HVAC, the operating parameter may alternatively or further comprise a combustion supply air stream parameter, for example a ventilator rotational speed, a combustion supply air stream as measured by a sensor, etc. Given a typical ratio between fuel (e.g. gas, oil) and air required for combustion, the supply of air to the combustion process in the HVAC provides an indication of the amount of fuel as consumed.

As illustrated from the above examples, the thermostat may be arranged to multiply the operating parameter by the nominal energy consumption parameter, thereby obtaining a reliable estimate from an operating parameter that expresses a fraction of the nominal load of the HVAC (namely in these examples the modulation level) and a nominal energy consumption at nominal load (i.e. an energy consumption of the HVAC at nominal load, i.e. in the above example at a modulation level of 100%).

The operating parameter may instead of or in addition to the above examples comprise a temperature of the heating fluid (e.g. heating water) as output by the HVAC, a temperature of the heating fluid as provided to the HVAC and/or a heating fluid circulation flow rate parameter, e.g. a pump speed of a heating fluid circulation pump. The thermostat may determine a temperature difference between the heating fluid as output by the HVAC and as provided to the HVAC and deriving a heat output of the HVAC from the heating fluid circulation flow rate parameter and the determined temperature difference. An energy consumption may be estimated from the heat output. An efficiency ratio, such as an average efficiency ratio as stored in the thermostat may be taken into account to estimate the energy consumption.

The HVAC may comprise any heating device, such as a domestic heating device, such as a gas fired heater, an oil fired heater, a combination of a gas or oil fired heater with a solar system and/or heat pump, etc., a ventilation device, and/or an air conditioner device, or any combination of these devices. Thus, the term HVAC may be understood as a heating, ventilation and/or air conditioning device.

In order to calculate a total energy consumption over a certain time period, the thermostat may be arranged to accumulate the estimated energy consumption over time.

In an embodiment, the accumulating the estimated energy consumption over time comprises accumulating the operating parameter over time, and multiplying the accumulated operating parameter by the nominal energy consumption to obtain the accumulated estimated energy consumption. As a result, the determination of he estimated energy consumption and associated calculations need not be repetitively made, hence reducing a data processing load on the thermostat as the remaining calculation need only be made once. Thereto, the parameter (e.g. the modulation level) may e.g. be logged periodically, e.g. once per second, and accumulated over a certain time period to derive an estimate of a total energy consumption over the logged time period.

In case the HVAC comprises a plurality of functions, logging of the operating parameter may be performed per function, so that an estimate of the energy consumption may be provided per function. For example, in case of a domestic heating device with integrated tap water heating, the operating parameter may be logged for the space heating and for the tap water heating separately, so that estimates of both may be provided. Generally the estimated energy consumption may be displayed to the user on a display of the thermostat and/or transmitted by the thermostat to a user device, such as a mobile telephone, computer, etc. The thermostat may thereto be connected to a data network, as will be described in more detail elsewhere in this document.

The thermostat may be arranged to compare the estimated energy consumption with a predetermined threshold, and to display an icon on the display device when the estimated energy consumption is below the threshold. The icon may thereby indicate to the user that the energy consumption is below a certain level as set by the threshold, so that economic heating may be indicated.

A forecast of a total energy consumption over a time period may be made, e.g. by linearly extrapolating an estimated energy consumption over a past sub time period. This may for example be useful for forecasting a total consumption of e.g. a present month, based on the estimate as determined over e.g. a past week. For forecasting over larger time periods, seasonal effects may be taken into account, e.g. by scaling the estimated total energy consumption over a past time period in a previous year, the scaling being performed based on a comparison of this year's energy estimate over a past sub time period with the energy estimate over the sub time period in the previous years. For example, having stored the energy estimate data over last year, the thermostat may at the end of February, based on the stored estimate of January and February of the present year, and the comparison with the stored estimate of January and February of the previous year, forecast a total energy consumption over the present years by dividing the stored estimate of January and February of the present year by stored estimate of January and February of the previous year, and multiplying by the stored estimate of the entire previous year. Generally, dividing the stored estimate of the present sub-time period by stored estimate of the sub time period of the previous year, and multiplying by the stored estimate of the entire time period of the previous year.

According to a third aspect of the invention, the thermostat is arranged for
- starting a timer in response to receiving a tap water heating active message,
- periodically increasing the timer value as long as the tap water heating active message is received,
- comparing the timer value with an shower notification timer value, and
- sending a tap water temperature low signal to the HVAC when reaching or exceeding the shower notification timer value. Thereby, energy and water saving may be provided, as - when a user takes a shower which exceeds a predetermined maximum showering time as set by the timer value, the supply of heated water may be stopped, for example in that the heating of the tap water by the HVAC is stopped or in that a tap water temperature setpoint is decreased. The shower notification timer value may e.g. be user defined. The heating of tap water may be interrupted for example for a predetermined time, e.g. a minute or a few minutes (which may likewise be timed by the timer), enabling to provide heated tap water
again for a next person taking a shower. The timer may be reset by the thermostat each time when heated tap water has been provided by the HVAC and a supply of the tap water is stopped before the timer reaching the notification timer value, so as to avoid the supply of heated tap water to be stopped unintentionally.

A pre-notification that the time is soon to expire, e.g. in the form of a short pulse of colder water, may be provided to the user in that the thermostat is further arranged for
- storing a pre-notification timer value of the timer having a value to be reached by the timer before reaching the shower notification timer value,
- comparing the timer value with a shower pre-notification timer value, and
- sending a tap water pulse temperature low signal to the HVAC when reaching the shower pre-notification timer value in order for the HVAC to pulse the tap water temperature to a lower value.

According to a fourth aspect of the invention, the thermostat comprises a further data communication port and be arranged to
- establish a connection via the further data communication port to an electronic home appliance; and
- to monitor if the electronic home appliance is active; and
- to set a thermostat setpoint to a comfort temperature when the electronic home appliance is active.
For example on a Friday night, in a weekend, etc., a user may tend to deviate from normal schedules and for example stay awake longer, for example watching television. The electronic home appliance that is active then (for example a smart television, a smartphone, etc.) may communicate with the thermostat (via e.g. a (wireless) network at home) causing the thermostat to stay at comfort level as long as the electronic home appliance is active. In an embodiment, the electronic home appliance may be provided with a thermostat communication software application, such as a thermostat communication software app, which is arranged to detect when the electronic home appliance is on, to transmit data to the thermostat to indicate to the thermostat that the electronic home appliance is on. The thermostat may then maintain the comfort temperature in response to the receipt of the data that indicates that the electronic home appliance is on. Alternatively, the thermostat may be arranged to interrogate a network communication device (such as a network router) of a network to which the electronic home appliance is connected, whether the electronic home appliance is on, and maintain the comfort temperature in response to the receipt of data that indicates that the electronic home appliance is active. As a further alternative, the thermostat may be arranged to ping an address of the appliance (e.g. an internet protocol IP address), and when receiving a response, the thermostat is aware of the appliance being active. The appliance may for example be at least one of a television, a tablet computer and a smartphone.

Accordingly to a fifth aspect of the invention, the thermostat comprises the further data communication port and is arranged for:
- storing location data representing a geo-location of the thermostat, and
- requesting via the further data communication port a temperature at the geo-location
Hence, an outdoor temperature may be acquired by the thermostat without requiring to install an outdoor temperature senor and associated cabling. The thermostat may control the HVAC using a measured indoor temperature (e.g. measured by means of a temperature sensor of the thermostat), the received temperature at the geo location, or both. In case the outside temperature is accompanied by a prognosis, the thermostat may take account thereof, For example, in case of prognoses of a temperature rise, the thermostat may control the HVAC so as to reduce a heating by the HVAC, so as to save energy by the anticipation.

It will be understood that the various aspects of the invention may be combined into a same thermostat, however each of the disclosed aspects may be implemented as such, i.e. without implementing other aspects of the invention in the same thermostat.

The invention will further be explained in the context of the appended drawing and corresponding description, in which a non limiting embodiment of the invention is disclosed, wherein:
- Figure 1: depicts a block schematic overview of a heating system comprising a thermostat according to one or more of the aspects of the invention;
- Figure 2: depicts a schematic front view of a thermostat in accordance with one or more aspects of the invention; and
- Figure 3: depicts a schematic front view of a thermostat in accordance with one or more aspects of the invention.

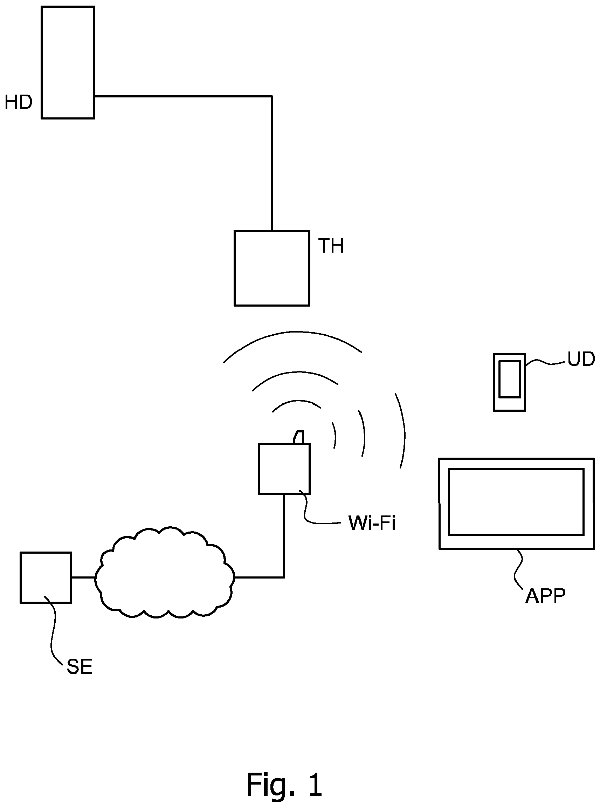

Figure 1 depicts a thermostat TH, such as a room thermostat, which is connected via a wired connection to a HVAC, such as in this example a domestic heating device HD, such as a gas fired heating device or any other heating device, e.g. of a central heating system, a tap water heating device or a combined heating device that provides central heating as well as tap water heating. It will be understood that, although in the examples as described reference is made to a (domestic) heating device, any other type of HVAC could be applied as well. The connection between the domestic heating device and the thermostat may be a wired connection. Generally, use is made of a standard wiring as may be pre-installed in the domestic environment, e.g. a dual lead, triple lead or quadruple lead cable. Conventionally, the wired connection was used for on-off switching, however use may be made of a data exchange protocol, while electric power may be supplied from the heating device to the thermostat via the same leads or separate leads of the connection. The thermostat is equipped with a data communication port, such as a data communication interface, or in more conventional implementations an on-off switch, etc. Optionally, electrical power may be supplied to the thermostat via the same port (e.g. a two wire connection for combined data communication and electrical power supply). The thermostat TH is connected to a communication network, in this example a data communication network, more particularly a wireless data communication network, such as a Wi-Fi network or a network or other data communication link in accordance with any other wireless data communication standard. The thermostat thereto comprises a further data communication port, such as in this example a wireless data communication port. The network in this example also connects to a mobile user device MUD, such as a smartphone or a tablet computer. Furthermore, the network in this example connects to a television, such as a so called smart television or internet enabled television. The wireless communication network may connect via the internet to a variety of servers that may provide data, such as a weather server that provides weather data. The server may provide a plurality of services, for example weather data, time data (that provides an exact time for setting a clock of the thermostat), software update data, etc. The services may be provided by the server itself, or may in turn be requested by the server from some other network entity that is connected to the internet.

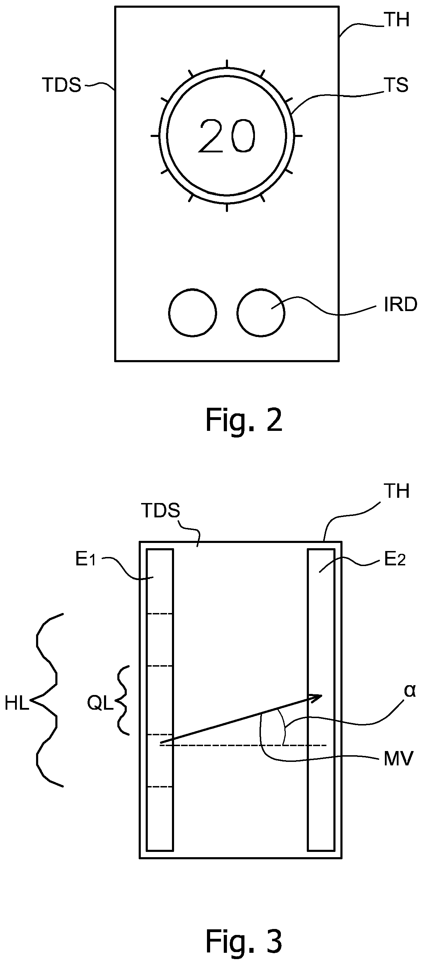

Figure 2 depicts a schematic front view of the thermostat TH, and shows a touch sensitive display TDS. Information depicted on the touch sensitive display comprises a temperature TMP depicted in numeric digits, and a 12 hour time scale TS which is represented by a circular scale surrounding the temperature display TMP. A coloured line segments of a coloured circle, concentric with the circular scale, indicates a setpoint temperature using a colour tone, whereby blue colour tones represent low temperatures and red colour tones represent higher temperatures. An infrared presence detector IRD may be provided to detect a presence of a person. The thermostat may be arranged to bring the display of the thermostat into an active state when a presence of a person is detected, and bring the display into a standby state otherwise, thus saving energy and increasing an operational life time of the thermostat.

A variety of aspects of the invention may be implemented in the thermostat TH, for example by means of suitable software programming of the thermostat. The aspects as described below may be implemented each as such, or may be combined into a single thermostat. It is thus expressly noted that the various aspects of the invention may, but not necessarily need to be combined with each other. Each of these aspects will be described below.

### Presence detection 2

The presence or absence of a user may be detected by the thermostat from a location of a mobile user device, such as a mobile user device (e.g. a telephone, a smartphone, etc.) Thereto, the thermostat receives via the wireless communication network information about a connection to or location of the user device. The thermostat may either receive data that signals that the user device is connected to the wireless local network (and therefore, is in proximity of the building) or data that informs the thermostat about a location of the user device (such as derived from a position of the user device as derived from a GPS position measurement device comprised in the user device). The thermostat derives from the received data about the connection to or location of the mobile user device if the mobile user device resides in a predetermined proximity area (i.e. an area in and/or around the building) and the thermostat sets its temperature setpoint to a comfort temperature when derived that the mobile user device resides in the predetermined proximity zone, and to an absence temperature when derived that the mobile user device does not reside in the predetermined proximity zone. Alternatively, the user device determines from the measured location if the location is within the proximity zone and sends the outcome of the determination to the thermostat. Thus, when the user device is signaled to be in or near the building, the temperature setpoint is raised so that the heating device may be activated, while a detection of an absence of the user device automatically leads to a lowering of the temperature so as to automatically save energy in case the user device is not present.

In case of multiple users (e.g. multiple inhabitants of the building where the heating device and thermostat are installed) each user device is associated by the thermostat with a corresponding setpoint temperature. When a user is detected to be present (as derived from the presence of the corresponding user device) the thermostat sets the setpoint temperature to the setpoint temperature associated with the user device whose presence has been detected. Thus, in case user device A is associated with a comfort temperature of 19 °C and user device 2 with a comfort temperature of 20 °C, the thermostat sets his setpoint temperature to 19 °C when user device 1 is detected to be present and to 20 °C when user device 2 is detected to be present. When both user devices are detected, the thermostat sets the setpoint temperature to the highest one of the associated setpoints of the user devices that are detected to be present, i.e. in this example the thermostat will set its setpoint to 20 °C (i.e. the highest one of 19 and 20 °C).

### Energy consumption

In order to estimate an energy consumption, the thermostat receives via the data communication port an operating parameter of the domestic heating device. The heating device may periodically send the operating parameter to the thermostat, by itself or on (a one time or repeated) request from the thermostat. Thus, the operating parameter may be provided to the thermostat in a polling type of data exchange, or a push type or in any other suitable way. The further data communication port is in this example formed by the wireless communication interface of the thermostat. Any other communication interface type may be provided, such as a wired interface, an infrared interface, a one to one connection, a network connection, etc. Alternatively, the thermostat may determine the operating parameter of the heating device and sent it to the heating device, thereby the thermostat controlling an operation of the heating device. Anyhow, having obtained the operating parameter, the thermostat estimates an energy consumption of the heating device from the operating parameter. The operating parameter is in this example a modulation level of the heating device. The modulation level, as set by the thermostat, determines a heat demand, and consequently the heating demand, thus the modulation level, is in a direct relation to the energy consumption rate of the heating device. For example, in a gas fired heating device, the heating device sets a level of the burner proportionally to the modulation level, thus a gas consumption being substantially proportional to the modulation level. A momentary energy consumption, such as gas consumption, of the heating device may thus be estimated from the operating parameter. The operating parameter such as the modulation level (or other parameter that represents a fraction of the nominal load of the heating device) may be multiplied by a nominal energy consumption parameter (e.g. a full load energy consumption) so as to provide an accurate estimate taking account of the typical energy consumption of the heating device, by accumulating the estimated energy consumption over time e.g. per hour, per day, per week, etc, an estimated total energy consumption over such time period may be obtained, which may be presented to the user, either on the display of the thermostat, or via the smartphone, tablet, notebook or other user device as connected to the wireless network. An data processing wise efficient implementation may be provided in that the thermostat logs or accumulates the operating parameter (e.g. the modulation level) and performs the calculation to calculate the energy consumption from the logged or accumulated data, only when the estimate is required.

Furthermore, the estimated energy consumption (or the averaged estimated energy consumption over an averaging time period, may be compared with a predetermined threshold, and an icon be displayed on the display device when the estimated energy consumption is below the threshold, so as to indicate an economic operation.

### Shower notification.

When a user takes a shower, tap water heating is activated and remains activates during the showering. The heating device sends its status to the thermostat. A timer may be provided in the thermostat to keep track of the shower time (i.e. the time during which the heating device is in a tap water heating status. In order to warn a user taking a shower that a preset shower time is exceeded, a warning is provided to the user in that the thermostat transmits a message to the heating device for (e.g. temporarily) reducing a tap water heating temperature or a heated tap water supply rate, causing the user to be aware that the time has exceeded and/or to stop the showing because of the unpleasant sensation of colder water. The thermostat thus starts a timer in response to receiving a tap water heating on message, periodically increases the timer value as long as the tap water heating on message is received, compares the timer value with an shower notification timer value, and sends a tap water temperature low signal to the domestic heating device when reaching or exceeding the shower notification timer value.

In order to prevent the user from being suddenly faced with cold(er) water or no water, a pre notification is provided by the thermostat in the form of a brief interruption of the heated tap water supply or a brief temperature reduction thereof. A corresponding command may be sent by the thermostat to the heating device when a pre-notification value of the timer is reached. The shower time and pre-notification time may for example be set by a user, e.g. selected in a corresponding input menu at the touch sensitive display of the thermostat, or via the smartphone, computer or other connected device. For example, the shower time may be set at 15 or 20 minutes and the corresponding pre-notification time 3 minutes before expiry of the shower time.

### Presence detection 1

A clock program of the thermostat may also be adjusted or overruled from a monitoring of user activity. For example, the thermostat may receive data from an electronic home appliance, such as a smart television, a smartphone, a tablet computer etc. that at least informs the thermostat that the appliance is active (which in turn may be an indication of the presence of a user). The thermostat may either connect with a software program running on the appliance, which software program informs the thermostat if the appliance is on, or the thermostat may contact a router or other element of the wireless network WiFi, in order to receive data therefrom that signals the appliance is active (i.e. is involved in network communication or not). As a further possible implementation, the thermostat may be arranged to ping an address of the appliance (e.g. an internet protocol IP address), and when receiving a response, the thermostat is aware of the appliance being active. As long as the appliance is active, by the thermostat will keep the setpoint temperature at a comfort level. i.e. at a level corresponding to a presence of the user, and may thereby overrule a clock program.

### Outdoor temperature sensor

In order to obviate a need for installing an outdoor temperature sensor, the thermostat may connect via the Wi-Fi network or other communication interface with a server that provides weather information The thermostat stores location data representing a geo-location (e.g. position, address, geo-coordinates, GPS coordinates, etc.) of the thermostat, and in order to obtain an outdoor temperature, requests from the server a temperature at the geo-location.

The functions of the thermostat, such as for example described in this document, may be implemented by means of for example software that may be executed by a data processing device, such as a microprocessor. The software may be updated by a transmission from the server, via the internet and the data network (such as in the depicted example the WiFi network) of updated software to the thermostat.

## Claims

1. A thermostat for a HVAC comprising: a further data communication port, the thermostat being arranged to
- establish via the further data communication port a connection to a wireless communication network,
- receive via the wireless communication network information about a connection to or location of mobile user devices,
- derive from the received information about the connection to or location of a mobile user device if a mobile user device resides in a predetermined proximity zone,
- setting a temperature setpoint of the thermostat to a comfort temperature associated by the thermostat with a mobile user device when derived that the mobile user device resides in the predetermined proximity zone,
**characterized, that** the thermostat being arranged to
- setting the temperature setpoint of the thermostat to a highest one of comfort temperature associated by the thermostat with the mobile user devices when having derived that more than one mobile user device reside in the predetermined proximity zone,
- setting the temperature setpoint of the thermostat to an absence temperature when derived that the mobile user devices does not reside in the predetermined proximity zone.

2. The thermostat according to claim 1, characterized that, the thermostat for a HVAC comprising:
- a data communication port for connection to the HVAC,
wherein the thermostat is arranged to
- communicate via the data communication port an operating parameter of the HVAC to the HVAC.

3. The thermostat according to claim 2, characterized that, the thermostat estimate an energy consumption of the HVAC from the communicated operating parameter of the HVAC.

4. The thermostat according to claim 3, wherein the operating parameter expresses a fraction of a nominal load of the HVAC, the thermostat being arranged to estimate the energy consumption from a multiplication of the operating parameter and a nominal energy consumption parameter of the HVAC at the nominal load.

5. The thermostat according to claims 2 - 4, wherein the thermostat is arranged to accumulate the estimated energy consumption over time.

6. The thermostat according to claims 4 - 5, wherein the accumulating the estimated energy consumption over time comprises accumulating the operating parameter over time, and multiplying the accumulated operating parameter by the nominal energy consumption to obtain the accumulated estimated energy consumption.

7. The thermostat according to claims 3 - 6, wherein the thermostat is arranged to compare the estimated energy consumption with a predetermined threshold, and to display an icon on a display device of the thermostat when the estimated energy consumption is below the threshold.

8. The thermostat according to any of the preceding claims, characterized that, the thermostat is communicating with a tap water heating, which is activated during showering, the thermostat is arranged for
- starting a timer in response to receiving a tap water heating active message from the tap water heating,
- periodically increasing the timer value as long as the tap water heating active message is received,
- comparing the timer value with an shower notification timer value, and
- sending a tap water temperature low signal to the tap water heating when reaching or exceeding the shower notification timer value.

9. The thermostat according to claim 8, wherein the thermostat is further arranged for
- storing a pre-notification timer value of the timer having a value to be reached by the timer before reaching the shower notification timer value,
- comparing the timer value with a shower pre-notification timer value, and
- sending a tap water pulse temperature low signal to the tap water heating when reaching the shower pre-notification timer value in order for the tap water heating to brief temperature reduction.

10. The thermostat according to any of the preceding claims comprising the further data communication port for connection to a data communication network, the thermostat being arranged to
establish a connection via the further data communication port to an electronic home appliance connected with the data communication network;
monitor if the appliance is active, and
set a thermostat setpoint to a comfort temperature when the appliance is active.

11. The thermostat according to claim 12, wherein the appliance is at least one of a television, a tablet computer and a smartphone.

12. The thermostat according to claim 1 comprising the further data communication port, wherein the thermostat is arranged for
storing location data representing a geo-location of the thermostat, and requesting via the further data communication port a temperature at the geo-location.

13. The thermostat according to claims 2 - 12, characterized, that the thermostat may communicate via the data communication port with the HVAC and/or vice versa by means an on/off signal, a data communication protocol such as a standard or proprietary data communication protocol, or any other suitable means.

14. The thermostat according to claims 2 - 12, characterized, that the data communication port is a 1 to 1 connection, a wired data communication network or a wireless data communication network, particularly a RF connection or a Zigbee connection.

15. The thermostat according to any of the preceding claims, characterized, that the proximity zone is determined by a coverage area of a wireless home local area network, so that when the mobile user device connects to the wireless network, the temperature level is set by the thermostat to comfort level.

## Patentansprüche

1. Thermostat für ein HVAC-System, umfassend: einen weiteren Datenkommunikationsanschluss,
wobei der Thermostat eingerichtet ist,
über den weiteren Datenkommunikationsanschluss eine Verbindung mit einem drahtlosen Kommunikationsnetzwerk herzustellen,
über das drahtlose Kommunikationsnetzwerk eine Information über eine Verbindung mit mobilen Benutzervorrichtungen oder deren Position zu empfangen,
von der empfangenen Information über die Verbindung mit einer mobilen Benutzervorrichtung oder deren Position herzuleiten, ob sich eine mobile Benutzervorrichtung in einer vorgegebenen Näherungszone befindet,
einen Temperatursollwert des Thermostats auf eine Komforttemperatur, die durch den Thermostat mit einer mobilen Benutzervorrichtung assoziiert ist, einzustellen, wenn festgestellt wird, dass sich die mobile Benutzervorrichtung in der vorgegebenen Näherungszone befindet,
**dadurch gekennzeichnet, dass** der Thermostat eingerichtet ist,
den Temperatursollwert des Thermostats auf die höchste, der durch den Thermostat mit den mobilen Benutzervorrichtungen jeweils assoziiert Komforttemperatur, einzustellen, wenn festgestellt wurde, dass sich mehr als eine mobile Benutzervorrichtung in der vorgegebenen Näherungszone befindet,
den Temperatursollwert des Thermostats auf eine Abwesenheitstemperatur einzustellen, wenn hergeleitet wird, dass sich die mobilen Benutzervorrichtungen nicht in der vorgegebenen Näherungszone befinden.

2. Thermostat nach Anspruch 1, **dadurch gekennzeichnet, dass** der Thermostat für ein HVAC-System
einen Datenkommunikationsanschluss für eine Verbindung mit dem HVAC-System umfasst,
wobei der Thermostat eingerichtet ist,
über den Datenkommunikationsanschluss einen Betriebsparameter des HVAC-Systems an das HVAC-System zu kommunizieren.

3. Thermostat nach Anspruch 2, **dadurch gekennzeichnet, dass** der Thermostat einen Energieverbrauch des HVAC-Systems von dem kommunizierten Betriebsparameter des HVAC-Systems abschätzt.

4. Thermostat nach Anspruch 3, wobei der Betriebsparameter einen Teil einer Nennlast des HVAC-Systems ausdrückt, wobei der Thermostat eingerichtet ist, den Energieverbrauch von einer Multiplikation des Betriebsparameters und eines Nennenergieverbrauchsparameters des HVAC-Systems bei der Nennlast abzuschätzen.

5. Thermostat nach Ansprüchen 2 bis 4, wobei der Thermostat zum Ansammeln des geschätzten Energieverbrauchs im Laufe der Zeit eingerichtet ist.

6. Thermostat nach Ansprüchen 4 bis 5, wobei das Ansammeln des geschätzten Energieverbrauchs im Laufe der Zeit ein Ansammeln des Betriebsparameters im Laufe der Zeit und Multiplizieren des gesammelten Betriebsparameters mit dem Nennenergieverbrauch, um den gesammelten geschätzten Energieverbrauch zu erzielen, umfasst.

7. Thermostat nach Ansprüchen 3 bis 6, wobei der Thermostat eingerichtet ist, den geschätzten Energieverbrauch mit einem vorgegebenen Schwellenwert zu vergleichen und ein Symbol auf einer Display-Vorrichtung des Thermostats anzuzeigen, wenn der geschätzte Energieverbrauch unter dem Schwellenwert liegt.

8. Thermostat nach einem der vorhergehenden Ansprüche, **dadurch gekennzeichnet, dass** der Thermostat mit einer Leitungswasserheizung kommuniziert, die beim Duschen aktiviert wird, wobei der Thermostat eingerichtet ist,
einen Timer als Antwort auf ein Empfangen einer Leitungswasserheizungs-Aktiv-Benachrichtigung von der Leitungswasserheizung zu starten,
den Timerwert periodisch zu erhöhen, solange die Leitungswasserheizungs-Aktiv-Benachrichtigung erhalten wird,
den Timerwert mit einem Duschbenachrichtigungs-Timerwert zu vergleichen, und
ein Leitungswassertemperatur-Niedrig-Signal an die Leitungswasserheizung zu senden, wenn der Duschbenachrichtigungs-Timerwert erreicht oder überschritten wird.

9. Thermostat nach Anspruch 8, wobei der Thermostat ferner eingerichtet ist,
einen Vorbenachrichtigungs-Timerwert des Timers zu speichern, der einen Wert aufweist, welcher durch den Timer zu erreichen ist, bevor der Duschbenachrichtigungs-Timerwert erreicht wird,
den Timerwert mit einem Duschvorbenachrichtigungs-Timerwert zu vergleichen, und
ein Leitungswasserpuls-Temperatur-Niedrig-Signal an die Leitungswasserheizung zu senden, wenn der Duschvorbenachrichtigungs-Timerwert erreicht wird, damit die Leitungswasserheizung eine Temperaturreduzierung einweist.

10. Thermostat nach einem der vorhergehenden Ansprüche, der den weiteren Datenkommunikationsanschluss für eine Verbindung mit einem Datenkommunikationsnetzwerk umfasst, wobei der Thermostat eingerichtet ist,
eine Verbindung über den weiteren Datenkommunikationsanschluss mit einem elektronischen Haushaltsgerät, das mit dem Datenkommunikationsnetzwerk verbunden ist, herzustellen,
zu überwachen, ob das Gerät aktiv ist, und
einen Thermostatsollwert auf eine Komforttemperatur einzustellen, wenn das Gerät aktiv ist.

11. Thermostat nach Anspruch 12, wobei das Gerät mindestens eines von einem Fernseher, einem Tablet-Computer und einem Smartphone ist.

12. Thermostat nach Anspruch 1, der den weiteren Datenkommunikationsanschluss umfasst,
wobei der Thermostat eingerichtet ist,
Positionsdaten zu speichern, die eine Positionsbestimmung des Thermostats repräsentieren, und
über den weiteren Datenkommunikationsanschluss eine Temperatur an der Positionsbestimmung anzufordern.

13. Thermostat nach Ansprüchen 2 bis 12, **dadurch gekennzeichnet, dass** der Thermostat über den Datenkommunikationsanschluss mit dem HVAC-System und/oder umgekehrt mithilfe eines Ein-/Aus-Signals, eines Datenkommunikationsprotokolls, wie z.B. eines Standard- oder eines proprietären Datenkommunikationsprotokolls, oder einer beliebigen anderen geeigneten Einrichtung kommunizieren kann.

14. Thermostat nach Ansprüchen 2 bis 12, **dadurch gekennzeichnet, dass** der Datenkommunikationsanschluss eine 1-zu-1-Verbindung, ein drahtgebundenes Datenkommunikationsnetzwerk oder ein drahtloses Datenkommunikationsnetzwerk, insbesondere eine HF-Verbindung oder eine ZigBee-Verbindung, ist.

15. Thermostat nach einem der vorhergehenden Ansprüche, **dadurch gekennzeichnet, dass** die Näherungszone durch einen Versorgungsbereich eines drahtlosen lokalen Heimnetzwerks (Wireless Home Local Area Network) bestimmt wird, so dass, wenn die mobile Benutzervorrichtung mit dem drahtlosen Netzwerk verbunden wird, das Temperaturniveau durch den Thermostat auf das Komfortniveau eingestellt wird.

## Revendications

1. Thermostat pour système HVAC, comprenant : un port de communication de données complémentaire, le thermostat étant conçu pour
établir, par l'intermédiaire du port de communication de données complémentaire, une connexion à un réseau de communication sans fil,
recevoir, par l'intermédiaire du réseau de communication sans fil, une information sur une connexion à des dispositifs d'utilisateur mobiles ou sur une localisation de dispositifs d'utilisateur mobiles,
déterminer, à partir de l'information reçue sur la connexion à un dispositif d'utilisateur mobile ou sur la localisation d'un dispositif d'utilisateur mobile, si un dispositif d'utilisateur mobile se trouve dans une zone de proximité prédéterminée,
régler une température de consigne du thermostat à une température de confort associée par le thermostat à un dispositif d'utilisateur mobile quand il est déterminé que le dispositif d'utilisateur mobile se trouve dans la zone de proximité prédéterminée,
ledit thermostat étant **caractérisé en ce qu'**il est conçu pour
régler la température de consigne du thermostat à une température supérieure à la température de confort associée par le thermostat aux dispositifs d'utilisateur mobiles quand il est déterminé que plusieurs dispositifs d'utilisateur mobiles se trouvent dans la zone de proximité prédéterminée,
régler la température de consigne du thermostat à une température d'absence quand il est déterminé que les dispositifs d'utilisateur mobiles ne se trouvent pas dans la zone de proximité prédéterminée.

2. Thermostat pour système HVAC selon la revendication 1, **caractérisé en ce qu'**il comprend :
un port de communication de données pour la connexion au système HVAC,
le thermostat étant conçu pour :
communiquer au système HVAC, par l'intermédiaire du port de communication de données, un paramètre de fonctionnement du système HVAC.

3. Thermostat selon la revendication 2, **caractérisé en ce qu'**il estime une consommation d'énergie du système HVAC à partir du paramètre de fonctionnement communiqué au système HVAC.

4. Thermostat selon la revendication 3, dans lequel le paramètre de fonctionnement exprime une fraction d'une charge nominale du système HVAC, le thermostat étant conçu pour estimer la consommation d'énergie à partir d'une multiplication du paramètre de fonctionnement et d'un paramètre nominal de consommation d'énergie du système HVAC à la charge nominale.

5. Thermostat selon les revendications 2 à 4, le thermostat étant conçu pour cumuler dans le temps la consommation d'énergie estimée.

6. Thermostat selon les revendications 4 à 5, dans lequel le cumul dans le temps de la consommation d'énergie estimée consiste à cumuler le paramètre de fonctionnement dans le temps, et à multiplier le paramètre de fonctionnement cumulé par la consommation d'énergie nominale afin d'obtenir la consommation d'énergie estimée cumulée.

7. Thermostat selon les revendications 3 à 6, le thermostat étant conçu pour comparer la consommation d'énergie estimée à un seuil prédéterminé, et pour afficher une icône sur un dispositif d'affichage du thermostat quand la consommation d'énergie estimée est inférieure au seuil.

8. Thermostat selon l'une quelconque des revendications précédentes, **caractérisé en ce qu'**il communique avec un chauffage d'eau courante qui est activé pendant une douche, le thermostat étant conçu pour :
démarrer un temporisateur en réponse à la réception d'un message de chauffage d'eau courante actif en provenance du chauffage d'eau courante ;
augmenter périodiquement la valeur de temporisation tant que le message de chauffage d'eau courante actif est reçu ;
comparer la valeur de temporisation à une valeur de temporisation de notification de douche ; et
envoyer un signal bas de température d'eau courante au chauffage d'eau courante quand la valeur de temporisation de notification de douche est atteinte ou dépassée.

9. Thermostat selon la revendication 8, le thermostat étant en outre conçu pour :
stocker une valeur de temporisation de prénotification du temporisateur, qui doit être atteinte avant d'atteindre la valeur de temporisation de notification de douche ;
comparer la valeur de temporisation à une valeur de temporisation de prénotification de douche ; et
envoyer un signal bas à impulsions de température d'eau courante au chauffage d'eau courante quand la valeur de temporisation de prénotification de douche est atteinte afin de donner l'instruction au chauffage d'eau courante de réduire la température.

10. Thermostat selon l'une quelconque des revendications précédentes, comprenant le port de communication de données complémentaire pour la connexion à un réseau de communication de données, le thermostat étant conçu pour :
établir une connexion, par l'intermédiaire du port de communication de données complémentaire, à un appareil domestique électronique connecté au réseau de communication de données ;
surveiller si l'appareil est actif ; et
régler un point de consigne de thermostat à une température de confort quand l'appareil est actif.

11. Thermostat selon la revendication 12, dans lequel l'appareil est un téléviseur, une tablette informatique et/ou un smartphone.

12. Thermostat selon la revendication 1 comprenant le port de communication de données complémentaire, le thermostat étant conçu pour :
stocker des données de localisation représentant une géolocalisation du thermostat ; et
demander, par l'intermédiaire du port de communication de données complémentaire, une température à la géolocalisation.

13. Thermostat selon les revendications 2 à 12, **caractérisé en ce qu'**il peut communiquer, par l'intermédiaire du port de communication de données, avec le système HVAC et/ou inversement au moyen d'un signal de marche/arrêt, d'un protocole de communication de données, comme un protocole de communication de données standard ou propriétaire, ou par tout autre moyen approprié.

14. Thermostat selon les revendications 2 à 12, **caractérisé en ce que** le port de communication de données est une connexion 1 vers 1, un réseau de communication de données câblé ou un réseau de communication de données sans fil, en particulier une connexion RF ou une connexion Zigbee.

15. Thermostat selon l'une quelconque des revendications précédentes, **caractérisé en ce que** la zone de proximité est déterminée par une surface de couverture d'un réseau local domestique sans fil, de sorte que lorsque le dispositif d'utilisateur mobile se connecte au réseau sans fil, le niveau de température soit réglé par le thermostat à un niveau de confort.
